# EUROPEAN PATENT SPECIFICATION

(11) **EP 2 936 956 B1**
(45) Date of publication and mention of the grant of the patent: **05.10.2016**
(21) Application number: 15163777.4
(22) Date of filing: 15.04.2015
(51) Int. Cl.: A01B 33/02

(54) **WALK-BEHIND TILLER**
VON HINTEN LENKBARES BODENBEARBEITUNGSGERÄT
MOTOCULTEUR

(30) Priority: 24.04.2014 JP 2014090006
(43) Date of publication of application: 28.10.2015
(73) Proprietor: Iseki & Co., Ltd., Matsuyama-shi, Ehime 799-2692 (JP)
(72) Inventor: Tomihisa, Akira, Tobe-cho, Iyo-gun, Ehime 791-2193 (JP); Miyauchi, Masao, Tobe-cho, Iyo-gun, Ehime 791-2193 (JP); Kuroda, Kyosei, Tobe-cho, Iyo-gun, Ehime 791-2193 (JP); Nakagawa, Hideaki, Tobe-cho, Iyo-gun, Ehime 791-2193 (JP); Hiraoka, Toru, Tobe-cho, Iyo-gun, Ehime 791-2193 (JP)
(74) Representative: Spengler, Robert

(56) References cited:
- JP-A- 2011 182 758
- JP-A- 2013 170 654

## Description

### BACKGROUND OF THE INVENTION

### Field of the Invention

The present invention relates to a walk-behind tiller.

### Related Art of the Invention

Conventionally, a walk-behind tiller which tills a farm field is known (see, for example, a patent document JP publication No. 2011-182758).

The conventional walk-behind tiller is provided with a parking brake device which applies resistance to a rotation of the traveling wheels.

### SUMMARY OF THE INVENTION

### Problems to be Solved by the Invention

However, in the case of the configuration of the above described conventional walk-behind tiller, by applying the resistance to the rotation of the traveling wheels, the parking brake is actuated. Additionally, since the conventional parking brake device is a brake mechanism of the drum type, the resistance is applied to the rotation of the traveling wheels by the frictional force occurring in a brake shoe. Therefore, the problem with the conventional walk-behind tiller is that there are cases where the parking brake is not capable of surely locking of the movement of the traveling wheels on a sloop or an inclined farm field.

In view of the above-mentioned problem of the conventional walk-behind tiller, an object of the present invention is to provide a walk-behind tiller which is capable of surely locking the movement of the traveling wheels even when the walk-behind tiller is on the slope or the inclined farm field.

### Means for Solving the Problems

The 1^{st} aspect of the present invention is a walk-behind tiller comprising:
traveling wheels (4L and 4R);
plural tilling claws (6) which till a farm filed;
an engine (15) which rotates the traveling wheels (4L and 4R) and the plural tilling claws (6); and
a transmission case (2) housing a transmission mechanism which transmits driving power from the engine to the traveling wheels (4L and 4R) and the plural tilling claws (6),
characterized in that the walk-behind tiller comprises
a main clutch on/off device (18) which switches connection and disconnection of transmission of the driving power which is provided from the engine (15);
a driving shaft of traveling system (40), whose one end part (41) protrudes from the transmission mechanism to an outside of the transmission case (2), the one end part (41)being provided with an engaging part (41 a); and
a parking brake on/off device (311) which has an engaging member (301) being engageable with the engaging part (41a) of the driving shaft of traveling system (40), and which is capable of stopping and releasing a rotation of the driving shaft (40), wherein
by operating the parking brake on/off device (311) to stop the rotation of the driving shaft of traveling system (40), the engaging member (301) is engaged with the engaging part (41a), so that the rotation of the driving shaft (40) is stopped.

According to the above described configuration, the sure locking of the driving shaft (40) of the traveling system is performed without slipping, and the operation of the parking brake on/off device (311) is performed surely.

The 2^{nd} aspect of the present invention is the walk-behind tiller according to the 1^{st} aspect of the present invention, wherein
number of the engaging parts (41a) is plural are disposed on the one end part (41).

According to the above described configuration, the operation to engage the parking brake on/off device (311) becomes easy.

The 3^{rd} aspect of the present invention is the walk-behind tiller according to the 1^{st} or 2^{nd} aspect of the present invention, wherein
the main clutch on/off device (18) is connected with the parking brake on/off device (311),
in a state where the main clutch on/off device (18) is switched to a disconnection side, an action to switch the parking brake on/off device (311) so as to stop the rotation of the driving shaft (40), becomes possible, and
when the main clutch on/off device (18) is switched to a connection side, the parking brake on/off device (311) is switched so as to release the rotation of the driving shaft (40) in conjunction with a switching action of a connection side of the main clutch on/off device (18), so that the driving shaft (40) can rotate.

According to the above described configuration, it can be prevented to forget disengaging the parking brake on/off device (311). Additionally, it can be achieved to protect the transmission mechanism of the traveling system.

The 4^{th} aspect of the present invention is the walk-behind tiller according to any one of the 1^{st} to 3^{rd} aspects of the present invention, comprising:
an operating handle (17) which is disposed at rear side of a body of the walk-behind tiller, wherein
the main clutch on/off device (18) is disposed on the operating handle (17), and
the parking brake on/off device (311) is disposed in the neighborhood of the driving shaft (40) having the engaging part (41a).

According to the above described configuration, since the parking brake on/off device (311) is away from the operating handle (17), it can be prevented to operate the parking brake on/off device (311) carelessly.

The 5^{th} aspect of the present invention is the walk-behind tiller according to the 3^{rd} aspect of the present invention, wherein
when the main clutch on/off device (18) is kept in the connection side, the parking brake on/off device (311) cannot be operated to a side for stopping the rotation of the driving shaft (40).

According to the above described configuration, for example, when a main clutch (210) is kept in a "connected state" by pushing down the main clutch on/off device (18), the parking brake on/off device (311) can be prevented from operating to a "brake engaged-side", and a protection of the transmission mechanism of the traveling system can be performed.

### Advantageous Effects of the Invention

According to the present invention, it can be achieved to provide a walk-behind tiller which is capable of surely locking the movement of the traveling wheels even when the walk-behind tiller is on the slope or the inclined farm field.

### BRIEF DESCRIPTION OF THE DRAWINGS

FIG. 1 is a left side view of a tiller according to Embodiment of the present invention;
FIG. 2 is a plan view of an operating handle of the tiller according to the present Embodiment of the present invention;
FIG. 3 is a left side view of an operating handle of the tiller according to the present Embodiment of the present invention;
FIG. 4 is a schematic right side view of a transmission case of the tiller according to the present Embodiment of the present invention;
FIG. 5 is a schematic left side view which indicates a main part of the tiller whose belt cover is removed and explains a belt transmission mechanism and a main clutch according to the present Embodiment of the present invention;
FIG. 6 is a schematic sectional view of the transmission case for explaining a differential lock clutch of the tiller according to the present Embodiment of the present invention;
FIG. 7 is a schematic sectional view of the transmission case for explaining a rotary clutch of the tiller according to the present Embodiment of the present invention;
FIG. 8 is a partial enlarged right side view of the transmission case which is provided with a parking brake mechanism of the tiller according to the present Embodiment of the present invention;
FIG. 9 is a partial enlarged schematic plan view of the transmission case which is provided with the parking brake mechanism of the tiller according to the present Embodiment of the present invention;
FIG. 10 is an exploded schematic perspective view of a brake unit of the tiller according to the present Embodiment of the present invention;
FIG. 11 (a) is a schematic plan view of the parking brake mechanism for explaining a state where a parking brake lever is operated to a "brake engaged-side" in a state where the operator's hand is released from a main clutch lever of the tiller according to the present Embodiment of the present invention;
FIG. 11(b) is a schematic right side view of the parking brake mechanism shown by FIG. 11(a);
FIG. 12(a) is a schematic plan view of the parking brake mechanism for explaining a state where a parking brake lever is moved forcibly to a "brake disengaged-side (brake released-side)" by pushing the main clutch lever down according to the present Embodiment of the present invention;
FIG. 12(b) is a schematic right side view of the parking brake mechanism shown by FIG. 12(a);
FIG. 13(a) is a partial schematic plan view of the right side part of the transmission case in a state where a rotary/differential lock clutch lever is moved to a "disconnected side";
FIG. 13(b) is a partial schematic side view of the right side part of the transmission case shown by FIG. 13(a);
FIG. 14(a) is a partial schematic plan view of the right side part of the transmission case in a state where the rotary/differential lock clutch lever is moved to a "connected side";
FIG. 14(b) is a partial schematic side view of the right side part of the transmission case shown by FIG. 14 (a);
FIG. 15(a) is a partial schematic plan view of the right side part of the transmission case in a case where the rotary/differential lock clutch lever is moved to a "disconnected side", after a rotary clutch fixing pin is inserted in the superposed holes where an upper side hole for fixing rotary clutch and a lower side hole for fixing rotary clutch are in a state superposed on each other by allowing the rotary/differential lock clutch lever to be moved to a "connected side"; and
FIG. 15(b) is a partial schematic side view of the right side part of the transmission case shown by FIG. 15(a).

### Description of Symbols

- 1: body of the tiller
- 2: transmission case
- 2a: front side case
- 2b: rear side case
- 3: support frame
- 4L: left traveling wheel
- 4R: right traveling wheel
- 6: tilling claws
- 7: tilling device
- 15: engine
- 16: belt cover
- 17: operating handle
- 18: main clutch lever
- 20: rotary/differential lock clutch lever
- 40: travel second shaft
- 41a: parking brake groove
- 100: tiller
- 301: parking brake pin
- 310: parking brake lever unit
- 311: parking brake lever
- 330: bracket

### PREFERRED EMBODIMENTS OF THE INVENTION

Hereinafter, a configuration and operation with respect to a tiller as one example of a walk-behind tiller according to the present invention will be described with reference to drawings.

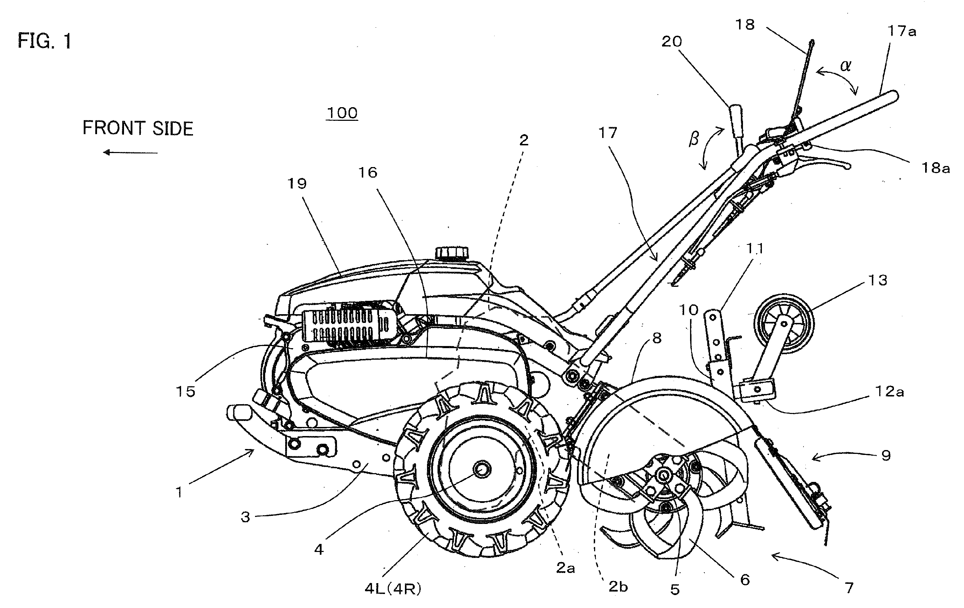

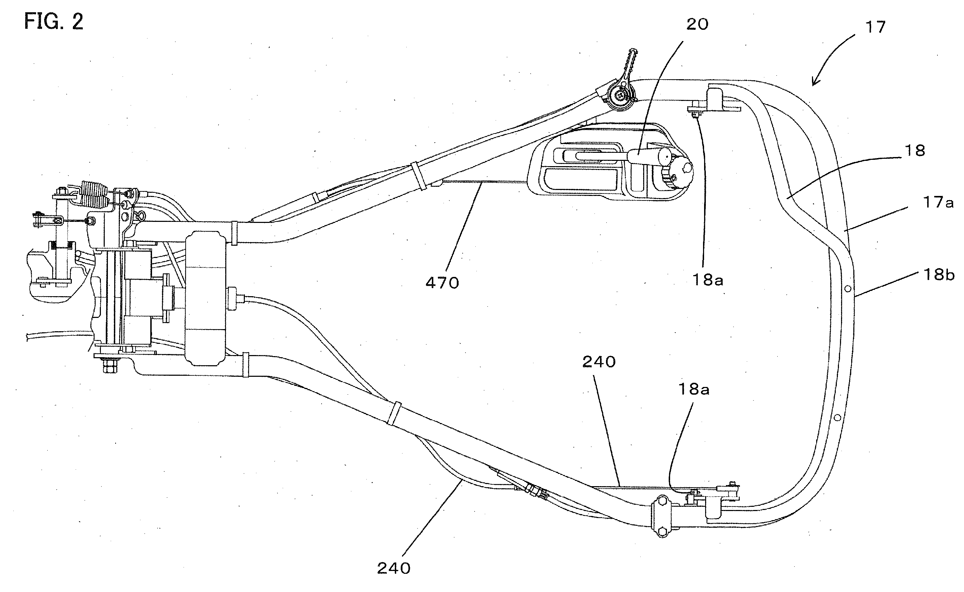

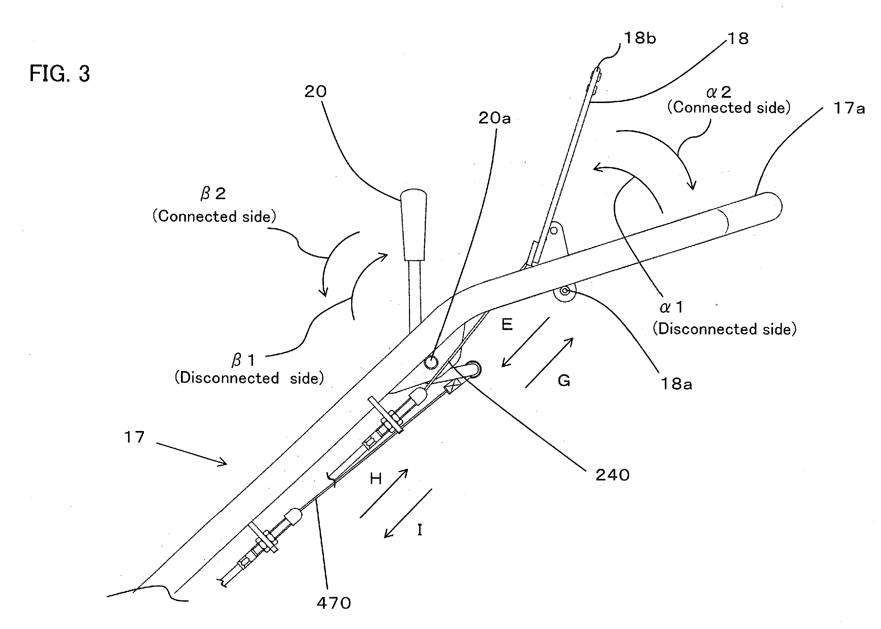

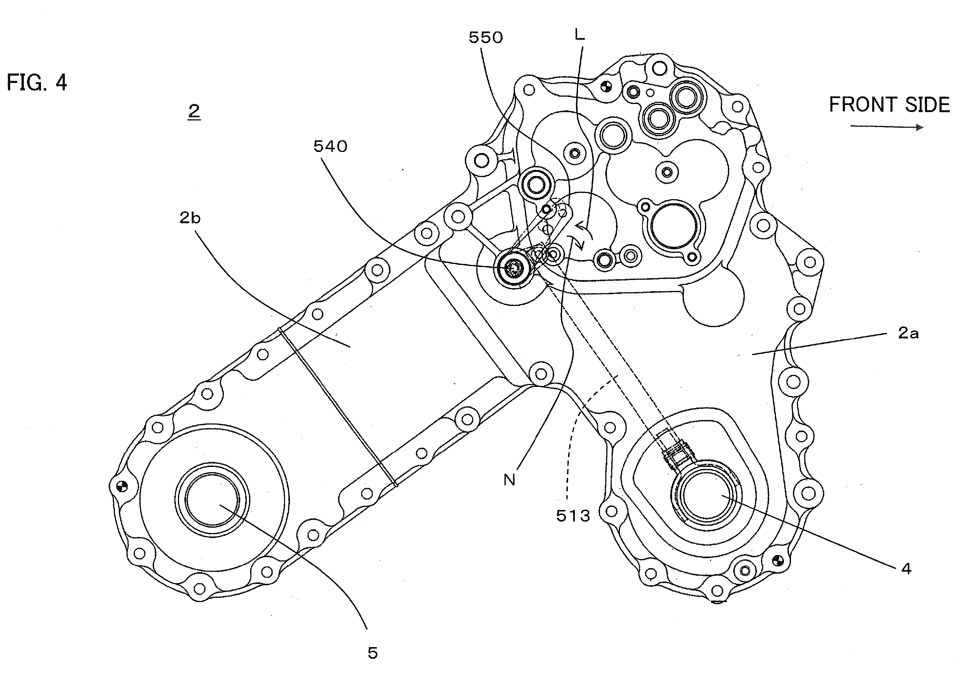

FIG. 1 is a left side view of a tiller according to the present embodiment of the present invention, FIG. 2 is a plan view of an operating handle of the tiller according to the present embodiment, FIG. 3 is a left side view of the operating handle of the tiller, and FIG. 4 is a schematic right side view of a transmission case of the tiller.

First of all, the configuration of the tiller 100 of the present embodiment will be described with reference to those drawings mainly.

As shown in FIGs. 1 and 4, a body 1 of the tiller 100 is provided with a transmission case 2 which is formed to be nearly of an inverted V-shape on the right side thereof, a support frame 3 which is disposed in front side of the transmission case 2, and the like. The lower part of a front side case 2a of the transmission case 2 is provided with an axle 4 which supports a left traveling wheel 4L and a right traveling wheel 4R, and the lower part of a rear side case 2b of the transmission case 2 is provided with a rotor shaft 5 which supports plural tilling claws 6 to configure a tilling device 7.

An upper side of the tilling device 7 is covered by a rotary cover 8, and a rear side of the tilling device 7 is covered by a rear cover 9. The rear end side of the rotary cover 8 is provided with a resistance bar holder 10, and a resistance bar 11 is held by the resistance bar holder 10 to be freely adjusted in height. The resistance bar holder 10 is provided with a tail wheel holder 12a, and a tail wheel 13 is held by the tail wheel holder 12a to be freely adjusted in height.

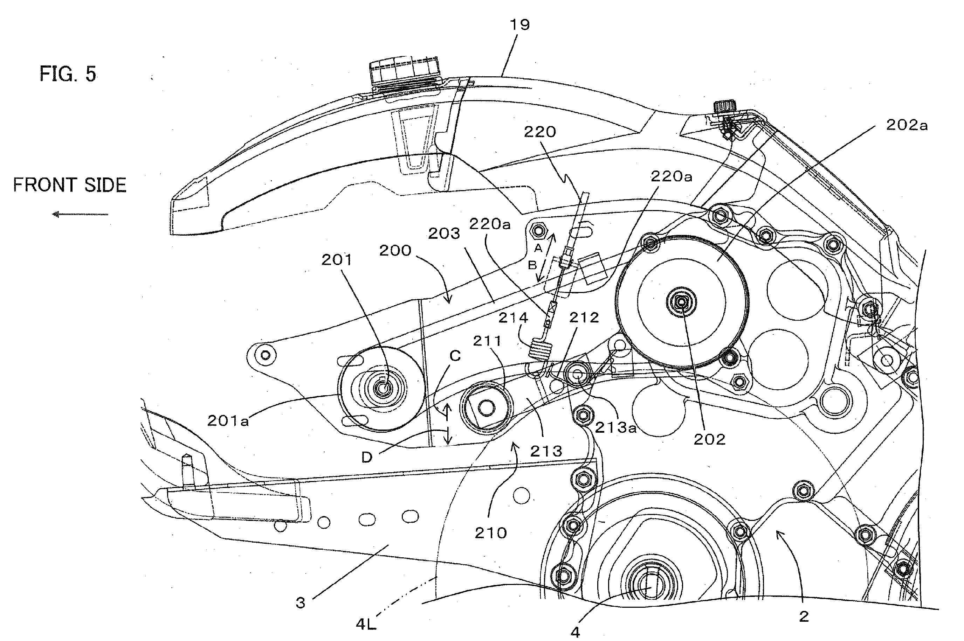

The support frame 3 is provided with an engine 15, and engine output is transmitted to a transmission mechanism in the transmission case 2 via a belt transmission mechanism 200 (see FIG. 5). Reference numeral 16 denotes a belt cover which covers the belt transmission mechanism 200. A fuel tank 19 is mounted above the engine 15.

A base part of the operating handle 17 is mounted on the upper part of the transmission case 2, the operating handle 17 extending rearwardly, obliquely and upwardly from the body 1 is arranged (see FIG. 1), and the operating handle 17 is formed into a loop-like shape in a plan view (see FIG. 2). Reference numeral 18 denotes a main clutch lever, and the action of swinging vertically about a first horizontal shaft 18a (see arrow a in FIG. 1) for the main clutch lever 18 is interlocked with the actions of the connection and disconnection for the main clutch 210 in the belt transmission mechanism 200. When the main clutch lever 18 is pushed down to be overlapped with a grip part 17a of the operating handle 17 by the operator, the main clutch 210 is set to be connected, and when the main clutch lever 18 is released by the operator, the main clutch 210 is set to be disconnected by the restoring force of the spring.

Incidentally, in the present embodiment, in a case where the main clutch 210 is set to be connected, the driving power which is provided from the engine 15 is transmitted to the axle 4 and the rotor shaft 5, and in a case where the main clutch 210 is set to be disconnected, the driving power from the engine 15 is not transmitted to the axle 4 and the rotor shaft 5.

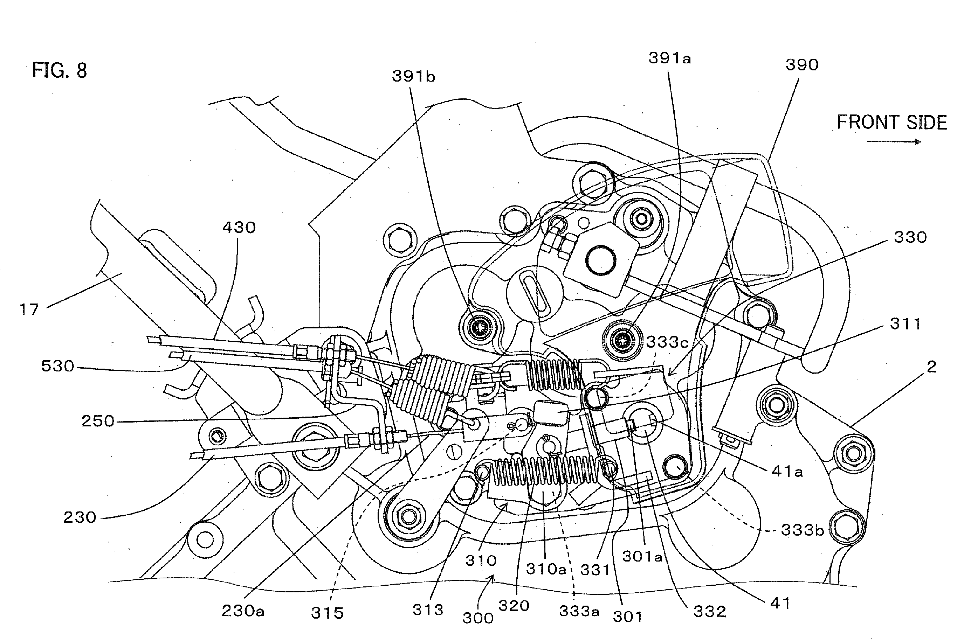

Moreover, a parking brake mechanism 300 which is capable of surely locking the driving shaft of the traveling system is disposed on the right side of the transmission case 2 of the tiller 100. The parking brake mechanism 300 (see FIG. 8) is configured so as to be interlocked with the action of the main clutch lever 18 for performing the connection or disconnection of the main clutch 210 (see FIG. 5). This matter will be described later in detail.

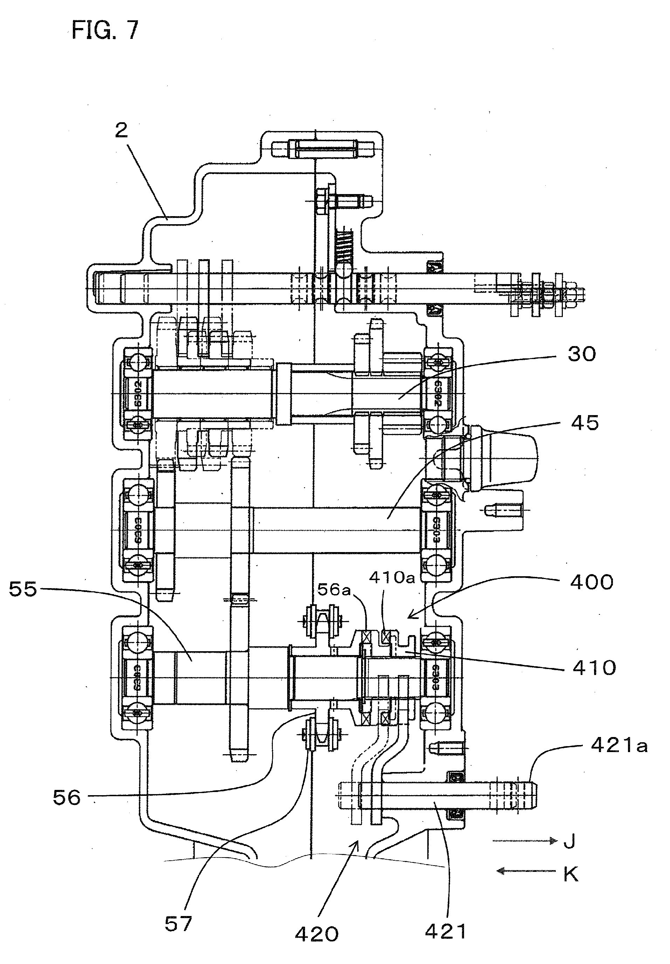

Additionally, a rotary/differential lock clutch lever 20 is disposed on the right side of the grip part 17a of the operating handle 17 of the tiller 100 (see FIGs. 1 and 2). The action of swinging vertically about a second horizontal shaft 20a (see arrow β in FIG. 1) for rotary/differential lock clutch lever 20 is interlocked with the actions of the connection and disconnection for both the rotary clutch 400 (see FIG. 7) and the differential lock clutch 500 (see FIG. 5). In a state where the main clutch 210 is set to be connected, basically, the driving power from the engine 15 is transmitted to the rotor shaft 5 when the rotary clutch 400 is set to be connected, and the driving power from the engine 15 is not transmitted to the rotor shaft 5 when the rotary clutch 400 is set to be disconnected. The differential lock is operated to the left traveling wheel 4L and the right traveling wheel 4R (that is, the differential function is stopped) when the differential lock clutch 500 is set to be connected, and the differential lock is released when the differential lock clutch 500 is set to be disconnected (that is, the differential function is operated). This matter will be also described later in detail.

Incidentally, the differential function means the function for generating a difference in the rotational frequency between the inside traveling wheel and the outside traveling wheel to perform a smooth turn when the tiller 100 is allowed to, for example, make a U-turn.

Meanwhile, the main clutch lever 18 is one example of a main clutch on/off device of the present invention.

Here, the above described main clutch 210 and the belt transmission mechanism 200 will be further described in detail with reference to FIG. 5.

FIG. 5 is a schematic left side view which indicates a main part of the tiller 100 whose belt cover 16 is removed and is used for explaining the belt transmission mechanism 200 and the main clutch 210. The illustration of the external form of the engine 15 is omitted partially.

As shown in FIG. 5, the belt transmission mechanism 200 is provided with a first sprocket 201a which is fixed to an engine output shaft 201, a second sprocket 202a which is fixed to a transmission input shaft 202, a transmission belt 203 which is suspended in the released state between the first sprocket 201a and the second sprocket 202a, and the main clutch 210. The main clutch 210 is configured so that the driving power from the engine 15 is allowed to be transmitted to the transmission mechanism in the transmission case 2 or not to be transmitted to the transmission mechanism by controlling the tension of the transmission belt 203 which is suspended in the released state.

As shown in FIG. 5, the main clutch 210 is configured by a tension arm 213 one end part of which is provided with a tension roller 211 and the other end part of which is rotatably supported by the rotation shaft 213a, and a tension spring 214 to connect the one end part 220a of the main clutch cable 220, the other end part of which is directed to the main clutch lever 18, and the center part of the tension arm 213. The tension roller 211 is arranged abuttingly to the transmission belt 203. Additionally, the tension arm 213 is provided with a torque spring 212 which always generates torque that rotates the tension roller 211 in the direction of separating from the transmission belt 203 about the rotation shaft 213a.

According to the above described configuration, when the main clutch lever 18 is pushed down to be overlapped with the grip part 17a of the operating handle 17 by the operator (see FIG. 1), the main clutch 210 is set to be connected (that is, a connected state). At this time, as shown in FIG. 5, the main clutch cable 220 is pulled in the direction of an arrow A, the tension arm 213 rotates clockwise about the rotation shaft 213a (see an arrow C in FIG. 5), the tension roller 211 pushes up the transmission belt 203, and the transmission belt 203 adheres to the first sprocket 201a and the second sprocket 202a. As a result, the driving power from the engine output shaft 201 is transmitted to the transmission input shaft 202. At this time, the tension spring 214 is elongated, and the torque spring 212 generates the torque which rotates the tension roller 211 in the direction of separating from the transmission belt 203 about the rotation shaft 213a.

According to the above described configuration, when the operator releases the operator's hand from the main clutch lever 18 which is pushed down to be overlapped with the grip part 17a of the operating handle 17 (see FIG. 1), the tension spring 214 shrinks (see FIG. 5), the tension arm 213 is rotated counterclockwise about the rotation shaft 213a (see an arrow D in FIG. 5) by the torque of the torque spring 212, and the main clutch 210 becomes disconnected (that is, a disconnected state). That is, at this time, as shown in FIG. 5, the main clutch cable 220 is pulled in the direction of an arrow B, the tension arm 213 is rotated counterclockwise about the rotation shaft 213a (see an arrow D in FIG. 5), and the tension roller 211 separates from the transmission belt 203. As a result, the transmission belt 203 suspended between the first sprocket 201a and the second sprocket 202a becomes loose. By means of this, the driving power from the engine output shaft 201 is not transmitted to the transmission input shaft 202.

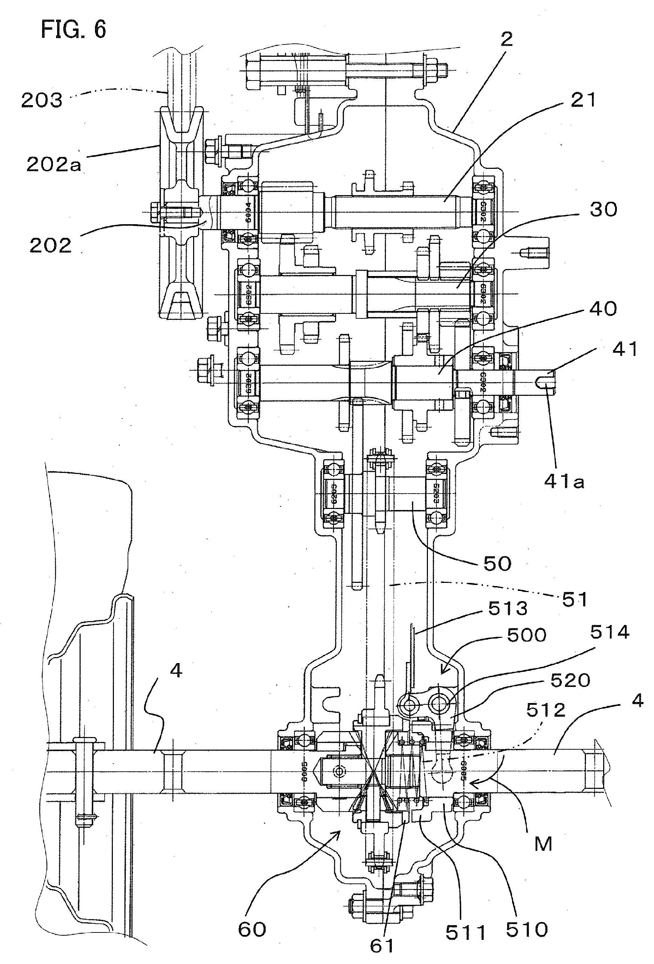

Next, the differential lock clutch 500 which is disposed in the transmission case 2 and the rotary clutch 400 will be described with reference to FIGs. 6 and 7.

FIG. 6 is a schematic sectional view of the transmission case 2 for explaining a differential lock clutch 500 of the tiller 100, and FIG. 7 is a schematic sectional view of the transmission case 2 for explaining a rotary clutch 400 of the tiller 100.

As shown in FIG. 6, an input shaft 21 to whose one end part a transmission input shaft 202 is fixed, a travel first shaft 30 to which the driving power from the input shaft 21 is transmitted via the predetermined gear mechanism, a travel second shaft 40 which transmits the driving power from the travel first shaft 30 to the traveling system via the predetermined gear mechanism, and a travel third shaft 50 which transmits the driving power from the travel second shaft 40 to the traveling system via the predetermined gear mechanism are disposed in the transmission case 2. Additionally, in the transmission case 2, a differential mechanism 60 which is disposed at the center position in the left and right direction of the axle 4 as a reference, and a differential lock clutch 500 which switches on/off the differential function of the differential mechanism 60 and is disposed in the neighborhood of the differential mechanism 60 are arranged, and also a traveling system chain belt 51 for transmitting the driving power is installed over between the travel third shaft 50 and the differential mechanism 60.

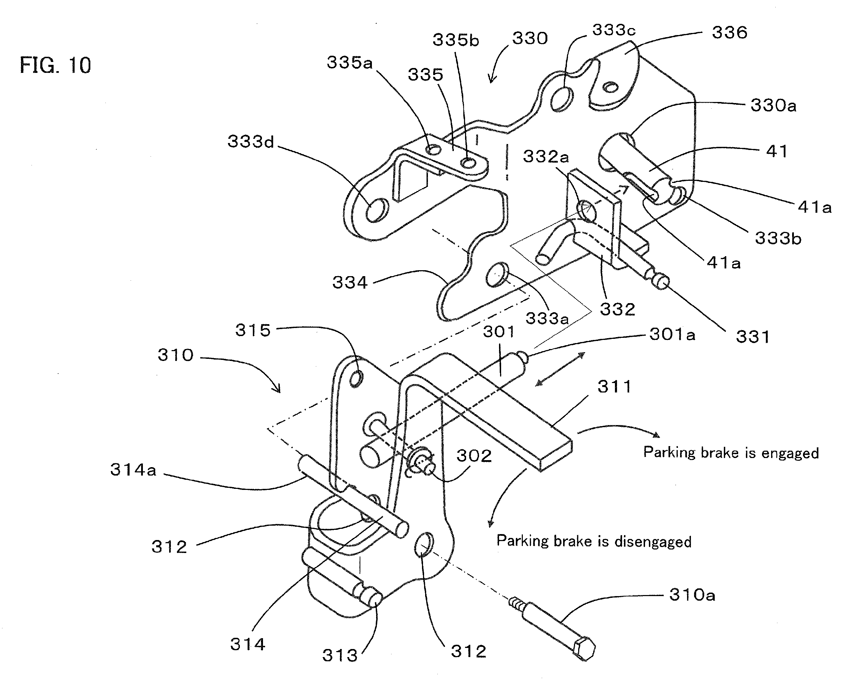

As shown in FIG. 6, one end part 41 of the travel second shaft 40 protrudes from the right side surface of the transmission case 2 to the outside thereof, and the tip part of the one end part 41 is provided with two parking brake grooves 41a and 41a (see FIG. 10). This matter will be described later in detail.

Meanwhile, the travel second shaft 40 is one example of a driving shaft of traveling system of the present invention, and the parking brake groove 41a is one example of an engaging part of the present invention.

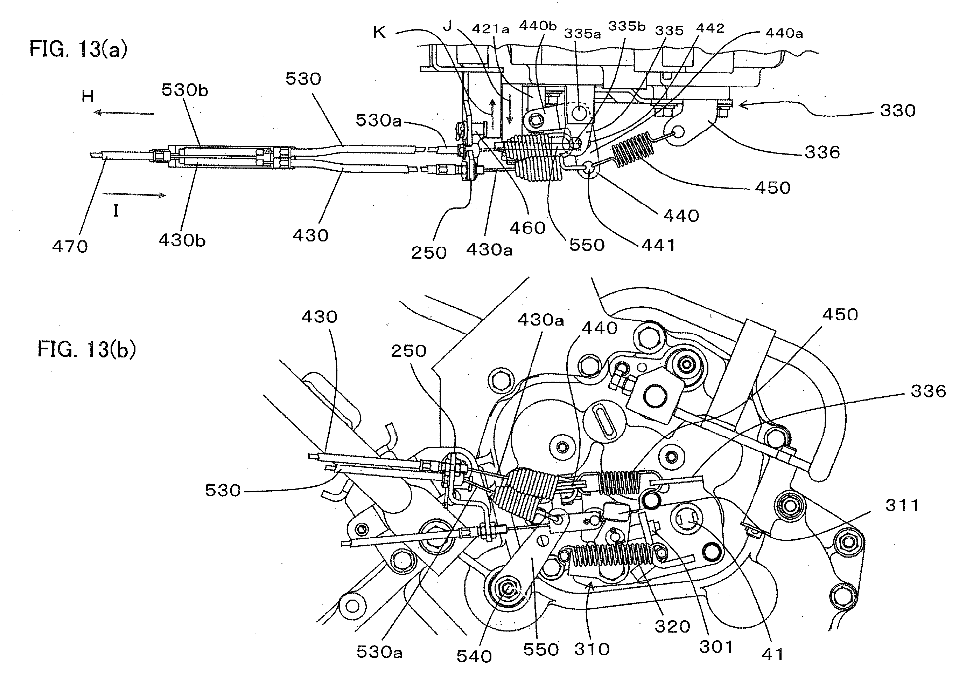

As shown in FIG. 6, the differential lock clutch 500 is constituted by a differential lock clutch body 510, a spring member 512, and a differential lock clutch arm 520. The differential lock clutch body 510 is provided with second claws 511 which can be engaged with first claws 61 which are disposed on the differential mechanism 60, and is connected to the axle 4 by spline fitting. The spring member 512 is arranged between the differential mechanism 60 and the differential lock clutch body 510, and constantly energizes the differential lock clutch body 510 in the direction away from the differential mechanism 60. The differential lock clutch arm 520 is rotatably arranged in the transmission case 2 and about a clutch arm shaft 514, one end part of the differential lock clutch arm 520 is connected to the differential lock clutch body 510, and the other end part thereof is connected to a differential lock arm shaft 540 which will be described later (see FIGs. 4 and 13(b)) via a differential lock connecting member 513 (see FIG. 4).

In FIG. 6, the second claws 511 of the differential lock clutch body 510 are located away from the first claws 61 of the differential mechanism 60. Therefore, FIG. 6 shows the state where the differential lock clutch 500 is set to be disconnected, that is, the differential function is operated.

Additionally, as shown in FIG. 7, a rotor first shaft 45 which transmits the driving power from the travel first shaft 30 to the tilling system via the predetermined gear mechanism, and a rotor second shaft 55 which transmits the driving power from the rotor first shaft 45 to the tilling system via the predetermined gear mechanism are disposed in the transmission case 2. Additionally, in the transmission case 2, a rotor first sprocket 56 which is connected by freely fitting nearly at the center position in the left and right direction of the rotor second shaft 55 as a reference, and a rotary clutch 400 which switches on/off the transmission of the driving power from the rotor second shaft 55 to the rotor first sprocket 56 are arranged.

Additionally, as shown in FIG. 7, rotary clutch 400 is constituted by a rotary clutch body 410 and a rotary clutch shifter 420. The rotary clutch body 410 is connected to the rotor second shaft 55 by spline fitting, and has rotary clutch claws 410a which are arranged in an engageable manner with rotor first sprocket claws 56a disposed on the rotor first sprocket 56. The rotary clutch shifter 420 moves the rotary clutch body 410 along the axis direction of the rotor second shaft 55. One end part 421a of the shifter shaft 421 which is one part of the rotary clutch shifter 420 is protruded from the transmission case 2 to the outside thereof, and is connected to a rotary clutch arm 440 which will be described later (see FIG. 13(a)).

When the shifter shaft 421 is slid in the direction of an arrow K, the rotor first sprocket claws 56a are engaged with the rotary clutch claws 410a, and the rotary clutch 400 becomes a connected state. When the shifter shaft 421 is slid in the direction of an arrow J, the rotary clutch claws 410a are separated from the rotor first sprocket claws 56a, and the rotary clutch 400 becomes a disconnected state.

A tilling system chain belt 57 for transmitting the driving power to the rotor shaft 5 is installed over between the rotor first sprocket 56 which is arranged on the rotor second shaft 55 and the rotor second sprocket (not shown) which is arranged on the rotor shaft 5 as shown in FIG. 7.

Next, the configuration of the parking brake mechanism 300 of the present embodiment will be mainly described more concretely with reference to FIGs. 8 to 10.

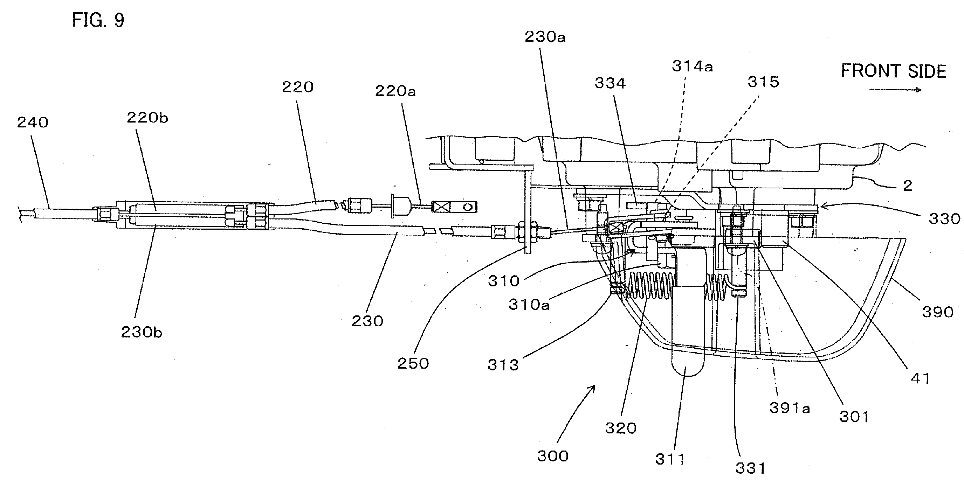

FIG. 8 is a partial enlarged right side view of the transmission case 2 which is provided with the parking brake mechanism 300, FIG. 9 is a partial enlarged schematic plan view of the transmission case 2 which is provided with the parking brake mechanism 300, and FIG. 10 is an exploded schematic perspective view of a brake unit of the tiller 100. In FIG. 9, a main part which is necessary for explaining the parking brake mechanism 300 is shown, but the other part which includes, for example, a rotary clutch arm support member 335, a return spring holder 336, and the like which will be described later is omitted.

As shown in FIGs. 8 and 10, one end part 41 of the travel second shaft 40 protrudes from the right side surface of the transmission case 2 to the outside thereof through a hole 330a which is disposed on a bracket 330 described later, and two parking brake grooves 41a and 41a are formed on the outer peripheral surface of the tip part of the one end part 41 at positions axially opposing to each other.

As shown in FIGs. 8 and 10, a parking brake lever unit 310 which has a parking brake pin 301 is rotatably fixed on the right side surface of the transmission case 2 by a bolt 310a. The parking brake pin 301 is provided with the tip part 301a which is engaged with the parking brake groove 41a and is formed into a spherical shape. The parking brake pin 301 is rotatably fixed on the parking brake lever unit 310 by a fixing pin 302.

As shown in FIG. 10, the parking brake lever unit 310 which is curved in a roughly U-shaped form in plan view has a parking brake lever 311, a through hole 312 which a bolt 310a is inserted into, a spring rear pin 313 which one end part of an over-center spring 320 is hooked on and which is arranged behind the through hole 312 (that is, a rotating fulcrum of the parking brake lever 311), a stopper pin 314, and a joining hole 315 to which a tip part 230a of a brake cable 230 connected to the main clutch lever 18 is joined. The parking brake lever 311 is a rectangular plate member which is extended from one side part of the roughly U-shaped form in plan view with respect to the parking brake lever unit 310 in a protruding direction from the transmission case 2, and can be rotated in a clockwise direction or a counterclockwise direction by operator's hand. The stopper pin 314 is arranged in such a manner that it is allowed to cross both side parts of the parking brake lever unit 310 curved in the roughly U-shaped form in plan view, and is fixed backward above the through hole 312 and in parallel with the bolt 310a. Additionally, when the parking brake lever 311 is rotated in a disengaged direction, the stopper pin 314 serves as a stopper by abutting on one part of a bracket 330 described later.

As shown in FIGs. 8 to 10, the bracket 330 on which an L-shape plate 332 having an L-shape in right side view is fixed by welding is fixed to the right side surface of the transmission case 2 by using bolt insertion holes 333a, 333b, 333c, and 333d (see FIG. 10). The L-shape plate 332 on which a spring front pin 331, which is curved in a roughly L-shaped form in plan view and which the other end part of the over-center spring 320 is hooked to, is fixed by welding in such a manner that the spring front pin 331 is located in front of the through hole 312 (that is, the rotating fulcrum of the parking brake lever 311). Additionally, the L-shape plate 332 has a hole 332a which slidably supports the parking brake pin 301. The bolt 310a which rotatably supports the parking brake lever unit 310 serves as a bolt by which the bracket 330 is fixed to the transmission case 2 using the bolt insertion hole 333a.

By means of this, the number of parts can be reduced.

Since the L-shape plate 332 has a curved form in the roughly L-shaped form in right side view, even if the driving power of the travel second shaft 40 is applied to the parking brake pin 301, the deformation of the L-shape plate 332 hardly occurs, because the strength is stronger than that of a simple flat plate.

Since the spring front pin 331 which is curved in a roughly L-shaped form in plan view is also fixed to the bracket 330 by welding with the L-shape plate 332, the deformation of the L-shape plate 332 can be prevented when the driving power of the travel second shaft 40 is applied to the parking brake pin 301 by using the spring front pin 331 curved in a roughly L-shaped form as well as the L-shape plate 332 having excellent strength as a member for increasing strength.

The over-center spring 320 the one end part of which is hooked on the spring rear pin 313 and the other end part of which is hooked on the spring front pin 331 is arranged approximately horizontally with respect to the body 1 of the walk-behind tiller.

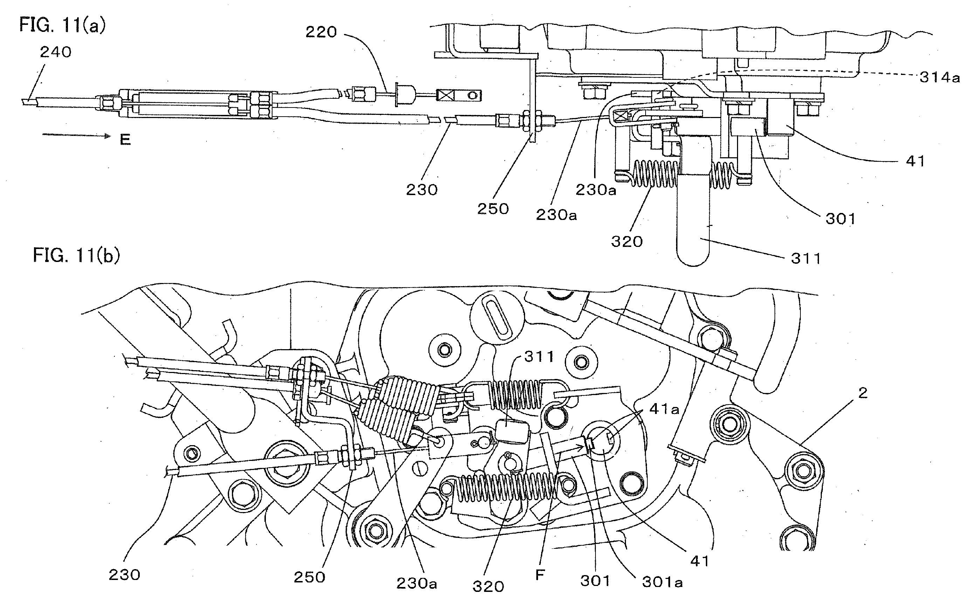

Consequently, when the parking brake lever 311 is located on the engaged side (see FIG. 11 (b)), the tension of the over-center spring 320 is applied in such a manner that the parking brake pin 301 is pushed to the travel second shaft 40, and as a result efficiency is improved.

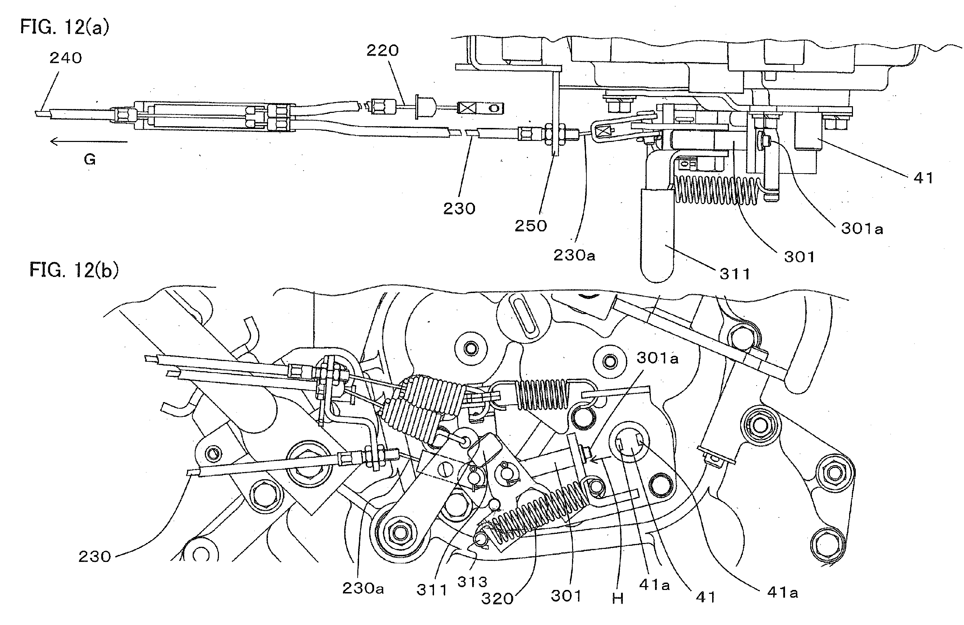

By means of this, a clearance between the spring rear pin 313 and the right traveling wheel 4R at the time of a minimum tread can be secured. That is, when the parking brake is disengaged, as shown in FIG. 12(b), the spring rear pin 313 exists downward. The outer peripheral portion of the right traveling wheel 4R exists below the spring rear pin 313. Accordingly, by arranging the spring rear pin 313 horizontally as much as possible, the clearance between the spring rear pin 313 and the right traveling wheel 4R can be secured, so that the spring rear pin 313 can be prevented from coming into contact with the right traveling wheel 4R. Usually, left and right positions of the pair of the traveling wheels of the tiller can be changed with respect to the axle easily (this matter is referred to as tread changing). In the configuration of the tiller 100 of the present embodiment, when the right traveling wheel 4R exists under the spring rear pin 313, the tread is minimum.

As shown in FIG. 10, the rear part of the bracket 330 is separated in upper and lower parts. Then, an end part lower surface 314a of the stopper pin 314, which exists near the transmission case 2, abuts on an upper edge 334 of the lower part separated from the upper part, so that the upper edge 334 of the bracket 330 serves as a stopper when the parking brake lever 311 is rotated in the disengaged direction.

Since a part of the bracket 330 also serves as a stopper, an independent new component is unnecessary, so that the configuration is simplified.

Meanwhile, as shown in FIG. 9, the other end part 220b of the main clutch cable 220 and the other end part 230b of the brake cable 230 are arranged in one cable as a main clutch/brake cable 240, and the main clutch/brake cable 240 is connected to the main clutch lever 18 (see FIGs. 2 and 3).

The tip part 230a side of the brake cable 230 is held by a stay plate 250 which is one of the components for fixing the operating handle 17 (see FIGs. 8 and 9). Additionally, the stay plate 250 holds a tip part 430a side of a rotary clutch cable 430 and a tip part 530a side of a differential lock clutch cable 530, and the rotary clutch cable 430 is arranged outside the differential lock clutch cable 530 in plan view with respect to the left and right direction of the axle 4 (see FIGs. 13(a) and 1).

By means of this, since one stay plate 250 is capable of holding the tip part 230a side of the brake cable 230, the tip part 430a side of the rotary clutch cable 430, and the tip part 530a side of the differential lock clutch cable 530, the number of the component members can be decreased, and a simple constitution can be achieved.

Since the rotary clutch cable 430 is arranged outside the differential lock clutch cable 530 in plan view, the protrusion amount of the constitution member in the lateral direction of the body 1 can be decreased.

According to the above configuration, in a case of use only for a parking brake, it is possible to achieve space-saving of structure as compared with a conventional internal expanding brake.

The parking brake mechanism 300 is configured, as described above, by the one end part 41 of the travel second shaft 40 which protrudes from the right side surface of the transmission case 2 to the outside thereof, two parking brake grooves 41a and 41a which are formed on the outer peripheral surface of the tip part of the one end part 41 at positions axially opposing to each other, parking brake lever unit 310, the bracket 330, and the like.

A cover 390 which is a resin-molded article is fitted to the transmission case 2 with screws 391a and 391 b (see FIG. 8). The cover 390 covers the mechanism part such as a transmission shifter or the like, and protects the rotating sections such as the one end part 41 of the travel second shaft 40 or the like in order to improve safety in consideration of design.

Meanwhile, the bracket 330 is provided with the rotary clutch arm support member 335 (see FIGs. 10 and 13(a)) which rotatably supports a rotary clutch arm 440 at a fulcrum member 335a (see FIG. 13(a)), and the return spring holder 336 (see FIGs. 10 and 13(a)) which holds one end part of a rotary clutch return spring 450 as a tension spring member, by bending each part of the bracket 330. The rotary clutch arm 440 connects the rotary clutch 400 and the tip part 430a of the rotary clutch cable 430 (see FIG. 13(a)). The rotary clutch arm support member 335 and the return spring holder 336 are not included in the parking brake mechanism 300. Consequently, by constituting the fulcrum member 335a and the rotary clutch return spring 450 integrally, variations in the dimensions can be eliminated, so that an adjusting mechanism of the rotary clutch return spring 450 can be eliminated and the number of the components can be decreased.

The above configuration and the operation of the various clutches will be described later with reference to FIGs. 13(a) to 15(b).

Meanwhile, the parking brake lever unit 310 of the present embodiment is one example of a parking brake on/off device of the present invention.

Next, the operation of the main clutch lever 18, the main clutch 210, and the parking brake mechanism 300 will be described with reference to FIGs. 11(a) to 12(b) mainly.

FIG. 11 (a) is a schematic plan view of the parking brake mechanism 300 for explaining a state where a parking brake lever 311 is operated to a "brake engaged-side" in a state where the operator releases a hand from a main clutch lever 18, and FIG. 11 (b) is a schematic right side view of the parking brake mechanism 300 for explaining a state where a parking brake lever 311 is operated to a "brake engaged-side" in a state where the operator releases his hand from a main clutch lever 18.

FIG. 12(a) is a schematic plan view of the parking brake mechanism 300 for explaining a state where a parking brake lever 311 is moved forcibly to a "brake disengaged-side (that is, a brake released-side)" by pushing the main clutch lever 18 down by the operator, and FIG. 12(b) is a schematic right side view of the parking brake mechanism 300 for explaining a state where a parking brake lever 311 is moved forcibly to a "brake disengaged-side (that is, a brake released-side)" by pushing the main clutch lever 18 down by the operator.

In a case where the operator releases a hand from the main clutch lever 18, the explanation will be as follows.

At this time, the following explanation will be described in a state where the over-center spring 320 went over the dead point thereof, the end part lower surface 314a of the stopper pin 314 abuts on the upper edge 334 of the lower part of the rear part of the bracket 330, and the parking brake lever 311 has been located to the "brake disengaged-side (brake released-side)".

When the operator releases the hand from the main clutch lever 18, by the restoring force of the tension spring 214 and the torque spring 212 (see FIG. 5), the main clutch lever 18 rotates upward about the first horizontal shaft 18a (see an arrow α1 in FIG. 3). At this time, the main clutch/brake cable 240 is about to be slackened, but the main clutch/brake cable 240 which is connected with the main clutch cable 220 is pulled in the direction of the arrow E (see FIGs. 3 and 11(a)), because the main clutch cable 220 is pulled in the direction of the arrow B (see FIG. 5) by the restoring force of the torque spring 212 which is disposed on the tension arm 213 (see FIG. 5).

When the main clutch cable 220 is pulled in the direction of the arrow B (see FIG. 5), the tension roller 211 rotates in the direction away from the transmission belt 203 (see an arrow D of FIG. 5), so that the main clutch 210 becomes a "disconnected state". By means of this, the driving power from the engine 15 is not transmitted to the transmission mechanism of the transmission case 2, and the axle 4 and the rotor shaft 5 stop their rotation.

On the other hand, when the main clutch/brake cable 240 is pulled in the direction of the arrow E (see FIG. 11(a)), the brake cable 230 which is connected with the main clutch/brake cable 240 is moved in the direction of the arrow E, but the tip part 230a side of the brake cable 230 becomes a slackened state at the vicinity of the place where the tip part 230a side protrudes from the stay plate 250 to the front side of the body 1, because the parking brake lever 311 is located at the "brake disengaged-side (brake released-side)" as described above.

At this time, the operator can move the parking brake lever 311 from the "brake disengaged-side (brake released-side)" to the "brake engaged-side", and after that can also move the parking brake lever 311 from the "brake engaged-side" to the "brake disengaged-side (brake released-side)" by a hand, because the tip part 230a side of the brake cable 230 is in the slackened state.

When the parking brake lever 311 is moved from the "brake disengaged-side (brake released-side)" to the "brake engaged-side" by a hand, the parking brake pin 301 is moved in the direction of an arrow F (see FIG. 11(b)) and the tip part 301a of the parking brake pin 301 is always pushed to the one end part 41 of the travel second shaft 40 by the contracting force of the spring of the over-center spring 320. After that, when the operator makes the tiller 100 move slightly in the front or rear direction, the left and right traveling wheels 4L and 4R are rotated and the travel second shaft 40 is rotated. And as a result, when any one of two parking brake grooves 41a and 41a which are formed on the one end part 41 comes to the position of the tip part 301a of the parking brake pin 301, the tip part 301a is inserted into the parking brake groove 41a (see FIG. 11(b)).

Accordingly, the travel second shaft 40 can be surely locked without a slip, and even if the tiller 100 exists on the slope or the sloping farm field, the operation of the parking brake can be ensured.

Additionally, since the travel second shaft 40 is provided with two parking brake grooves 41a and 41 a, the brake can be exerted earlier as compared with a case where a travel second shaft is provided with only one parking brake groove.

Next, in a case where the operator pushes down the main clutch lever 18, the explanation will be as follows.

At this time, the following explanation will be described under the conditions in which the parking brake lever 311 is located at the "brake engaged-side", and the tip part 301a of the parking brake pin 301 is inserted into the parking brake groove 41a (see FIG. 11 (b)) just before the main clutch lever 18 is pushed down.

When the operator pushes down the main clutch lever 18 (see an arrow α2 in FIG. 3), the main clutch/brake cable 240 is pulled in the direction of the arrow G (see FIGs. 3 and 12(a)), and at the same time, the main clutch cable 220 and the brake cable 230 which are connected with the main clutch/brake cable 240 are pulled in the direction of the arrow G.

When the main clutch cable 220 is pulled in the direction of the arrow G (see FIG. 12(a)), the tension roller 211 is rotated in the direction of pushing up the transmission belt 203, and as a result, the main clutch 210 becomes the "connected state". By means of this, the driving power from the engine 15 is transmitted to the transmission mechanism of the transmission case 2, and the rotation of the axle 4 is begun and the rotation of the rotor shaft 5 becomes possible.

On the other hand, when the brake cable 230 is pulled in the direction of the arrow G (see FIG. 12(a)), the parking brake lever 311 which is located at the "brake engaged-side" until the main clutch lever 18 is pushed down is moved forcibly to the "brake disengaged-side (brake released-side)". And as a result, the tip part 301a of the parking brake pin 301 comes out from the parking brake groove 41a, and the lock state of the travel second shaft 40 is released.

Accordingly, when the operator pushes down the main clutch lever 18 to make the main clutch 210 be set to the "connected state", the parking brake lever 311 is moved to the "brake disengaged-side (brake released-side)" and the lock state of the travel second shaft 40 is absolutely and automatically released. And as a result, even if the operator forgets to perform the operation of the parking brake lever 311, the safe tiller 100 can be provided.

When the parking brake lever 311 is moved forcibly to the "brake disengaged-side (brake released-side)", in a state where the over-center spring 320 went over the dead point thereof, the end part lower surface 314a of the stopper pin 314 abuts on the upper edge 334 of the lower part of the rear part of the bracket 330, and the parking brake lever 311 is kept in a stopping state at the position of the "brake disengaged-side (brake released-side)".

In the case of the tiller 100 of the present embodiment, in side view, a distance (an arm length) between the first horizontal shaft 18a which is an axis of rotation for the main clutch lever 18 and the rear end part 18b of the main clutch lever 18, which is gripped by the operator, is set much longer than a distance (an arm length) between the bolt 310a which is an axis of rotation for the parking brake lever 311 and the parking brake lever 311 which is held by hand.

In the case in which the main clutch lever 18 is pushed down, that is, in the case in which the main clutch 210 is set to the "connected state", the parking brake lever 311 is kept at the position of the "brake disengaged-side (brake released-side)". Accordingly, in that case, even if the operator tries to make the parking brake lever 311 rotate to the "brake engaged-side" by hand, the operator cannot make the parking brake lever 311 rotate because of the relationship between both the arm lengths (the relationship between both the arm ratios). That is, as the reason for that, the operation force for keeping the "connected state" of the main clutch 210 by the main clutch lever 18 is much larger than the operation force for making the parking brake lever 311 rotate to the "brake engaged-side", so that the operator cannot make the parking brake lever 311 rotate.

Accordingly, when the main clutch 210 is kept in the "connected state" by pushing down the main clutch lever 18, the parking brake lever 311 can be prevented from rotating to the "brake engaged-side", and the protection of the transmission mechanism of the traveling system can be performed.

Based on the above description, the additional explanations are as follows.
1. When the parking brake lever 311 is located in the "brake disengaged-side (brake released-side)", the operator can switch the main clutch 210 to the "connected state" by pushing down the main clutch lever 18 by hand, and can switch the main clutch 210 to the "disconnected state" by releasing the main clutch lever 18.
2. When the operator releases the hand from the main clutch lever 18, that is, when the main clutch 210 is in the "disconnected state", the parking brake lever 311 can be switched to any side of the "brake engaged-side" and the "brake disengaged-side".
3. When the operator pushes down the main clutch lever 18 by hand, that is, when the main clutch 210 is in the "connected state", the parking brake lever 311 is kept in the "brake disengaged-side (brake released-side)" and cannot be operated to the "brake engaged-side". As for the main clutch lever 18, if the operator does not continue to push down the main clutch lever 18, the "connected state" of the main clutch 210 cannot be kept. Accordingly, when the operator releases the hand from the main clutch lever 18, the main clutch 210 is automatically set to the "disconnected state", so that the safe operation can be achieved.
4. Even when the parking brake lever 311 is located in the "brake engaged-side", the operator can set the main clutch 210 to the "connected state" by pushing down main clutch lever 18 by hand. At this time, as described above, the parking brake lever 311 is moved forcibly to the "brake disengaged-side (brake released-side)", and the lock state of the travel second shaft 40 is released simultaneously.

Next, the configuration which relates to the operation of the rotary clutch 400 and the differential lock clutch 500 will be described with reference to FIGs. 13(a) and 13(b) mainly.

FIG. 13(a) is a partial schematic plan view of the right side part of the transmission case 2 in a case where the operator operates to move the rotary/differential lock clutch lever 20 to the "disconnected side (see an arrow β1 in FIG. 3), that is, the operator operates to set both the rotary clutch 400 (see FIG. 7) and the differential lock clutch 500 (see FIG. 6) to the "disconnected-state". FIG. 13(b) is a partial schematic side view of the right side part of the transmission case 2 which is shown in FIG. 13(a).

As for the same configurations as those which are explained in FIGs. 8 to 10, the same reference numerals are used in FIG. 13(a) and 13(b), and the explanation will be omitted.

As shown in FIG. 13(a), the rotary clutch arm 440 is a roughly L-shaped plate in plan view, and has one side part 440a of the L-shaped plate and the other side part 440b. The other end part of the rotary clutch return spring 450 as a tension spring member is caught in a spring hole 441 which is formed on the tip part of the other side part 440b side, and the tip part of the other side part 440b is rotatably connected to the one end part 421a of the shifter shaft 421 which is a part of the rotary clutch shifter 420. Additionally, the tip part 430a of the rotary clutch cable 430 is caught in the spring hole 441.

Additionally, the one side part 440 a side of the rotary clutch arm 440 is provided with the lower side hole for fixing rotary clutch 442 between the fulcrum member 335a and the spring hole 441. When the rotary clutch cable 430 is pulled in the direction of the arrow H (see FIG. 13(a)), the rotary clutch arm 440 is rotated about the fulcrum member 335a in plan view and in a clockwise direction, and the one end part 421a of the shifter shaft 421, which is connected to the other side part 440b, is slid in the direction of the arrow K (see FIGs. 7 and 13(a)), so that the rotary clutch 400 (see FIG. 7) becomes the "connected state". Here, the lower side hole for fixing rotary clutch 442 is a hole which is used for forcibly keeping the "connected state" of the rotary clutch 400.

Therefore, the tip part of the rotary clutch arm support member 335 is also provided with an upper side hole for fixing rotary clutch 335b at the superposed position which is superposed on the position of the lower side hole for fixing rotary clutch 442 in plan view, when the rotary clutch 400 is located in the "connected state".

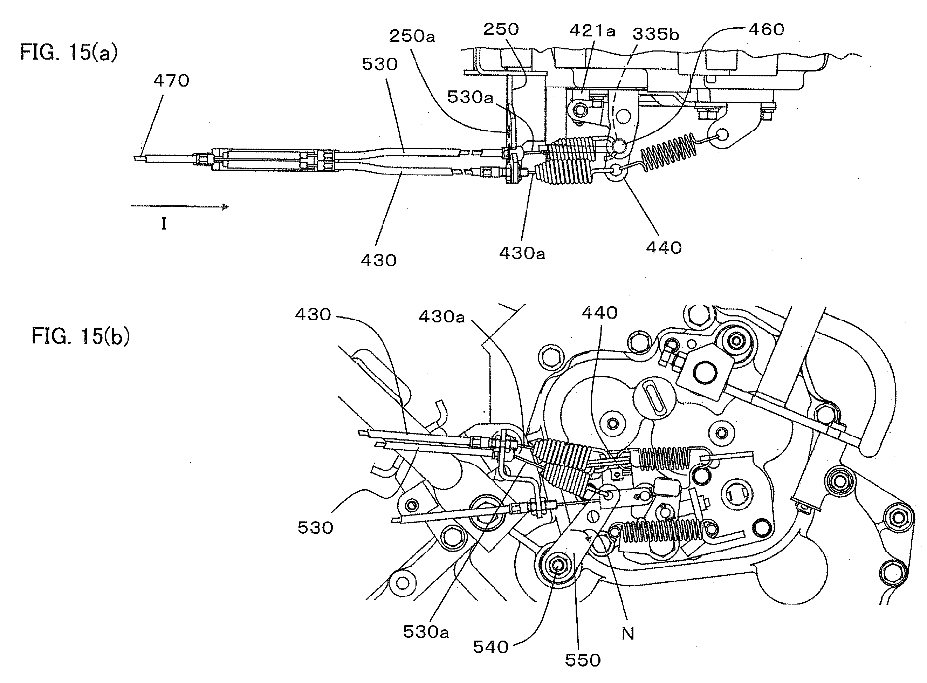

When the upper side hole for fixing rotary clutch 335b and the lower side hole for fixing rotary clutch 442 are superposed on each other, the operator removes a rotary clutch fixing pin 460 from the stay plate 250, and inserts the rotary clutch fixing pin 460 into the above described superposed holes which are composed of the upper side hole for fixing rotary clutch 335b and the lower side hole for fixing rotary clutch 442. And as a result, since the position of the rotary clutch arm 440 is fixed, the "connected state" of the rotary clutch 400 can be kept regardless of the operation of the rotary/differential lock clutch lever 20. Here, the rotary clutch fixing pin 460 has a columnar shape which is provided with a flange on the one end thereof, and is preliminarily inserted in the holding hole for rotary clutch fixing pin 250a (see FIG. 15(a)) which is formed on the stay plate 250.

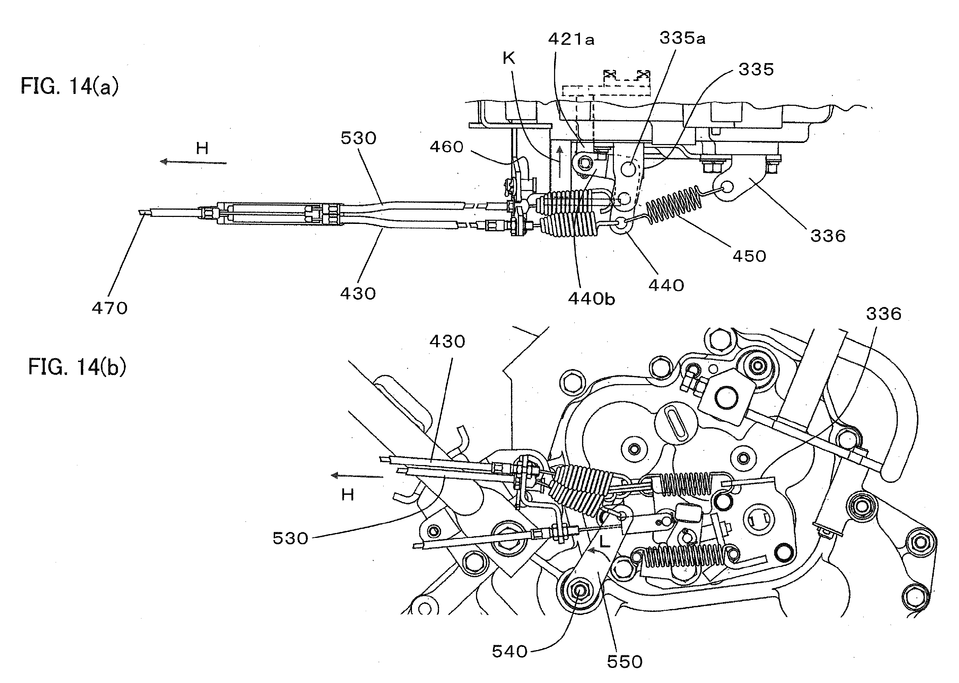

Since the holding hole for rotary clutch fixing pin 250a (see FIG. 15(a)), which is used for holding the rotary clutch fixing pin 460 (see FIG. 14(a)) before inserting the rotary clutch fixing pin 460 into the superposed holes and after removing it from the superposed holes, is disposed on the stay plate 250, the size of the rotary clutch arm 440 can be decreased, so that the protrusion amount of the rotary clutch arm 440 in the lateral direction of the body 1 can be decreased.

Additionally, the differential lock arm shaft 540 protrudes from the right side surface of the transmission case 2, and a long plate-like differential lock arm 550 is fixed on the tip part of the differential lock arm shaft 540. The position from which the differential lock arm shaft 540 protrudes is located behind the parking brake lever unit 310 and below the stay plate 250. The tip part 530a of the differential lock clutch cable 530 is caught in the hole which is disposed on the tip part of the differential lock arm 550.

Next, based on the above configuration which includes the rotary/differential lock clutch lever 20, the rotary clutch 400, and the differential lock clutch 500, each operation will be described with reference to FIGs. 13(a) to 15(b).

FIG. 14(a) is a partial schematic plan view of the right side part of the transmission case 2 in a case where the operator operates to move the rotary/differential lock clutch lever 20 to the "connected side (see an arrow β2 in FIG. 3), that is, the operator operates to set both the rotary clutch 400 (see FIG. 7) and the differential lock clutch 500 (see FIG. 6) to the "connected state". FIG. 14(b) is a partial schematic side view of the right side part of the transmission case 2 which is shown in FIG. 14(a).

FIG. 15(a) is a partial schematic plan view of the right side part of the transmission case 2 in a case where the operator operates to move the rotary/differential lock clutch lever 20 to the "disconnected side", after the rotary clutch fixing pin 460 is inserted in the superposed holes in a state where the operator moves the rotary/differential lock clutch lever 20 to the "connected side" and both the upper side hole for fixing rotary clutch 335b and the lower side hole for fixing rotary clutch 442 are superposed on each other. FIG. 15(b) is a partial schematic side view of the right side part of the transmission case 2 which is shown in FIG. 15(a).

As for the same configurations as those which are explained in FIGs. 8 to 10, 13(a) and 13(b), here, the same reference numerals are used, and the explanation will be omitted.

As for FIGs. 13(a) to 15(b), the parking brake pin 301 is not inserted into the parking brake groove 41a.

Here, a situation will be described, in which the operator makes the tiller 100 take a turn in a case of traveling and tilling in the farm field so as to make the tiller 100 move to the neighboring ridge to continue the working after reaching the end of one ridge of the farm field.

Here, according to the tiller 100 of the present embodiment, when the operator makes the tiller 100 take a turn, the operator can select whether or not the rotation of the tilling claws 6 is stopped.

First of all, a situation will be described, in which the operator can make the tiller 100 stop the rotation of the tilling claws 6 in correspondence with the operation of the rotary/differential lock clutch lever 20 when the operator makes the tiller 100 take a turn, with reference to FIGs. 13(a) and 13(b).

In this situation, as shown in FIG. 13(a), the rotary clutch fixing pin 460 is inserted in the holding hole for rotary clutch fixing pin 250a (see FIG. 15(a)) which is formed on the stay plate 250.

When the operator makes the tiller 100 take a turn to move to the neighboring ridge, the operator pulls the rotary/differential lock clutch lever 20 backward which was tilted forward until just before the operation of pulling the rotary/differential lock clutch lever 20 (see the arrow β1 in FIG. 3) so as to make the tiller 100 stop the rotation of the tilling claws 6 and make the differential lock for the left and right traveling wheels 4L and 4R be released (that is, the differential function is operated). By means of this, the rotary clutch cable 430 and the differential lock clutch cable 530 are pulled in the direction of an arrow I (see FIG. 13(a)), and a rotary/differential lock clutch cable 470 is pulled in the direction of an arrow I (see FIGs. 3 and 13(a)) by the restoring force of the spring member 512 (see FIG. 6) which is disposed on the differential lock clutch 500 side and the rotary clutch return spring 450.

Accordingly, the rotary clutch arm 440 rotates in a counterclockwise direction in plan view about the fulcrum member 335a, and the one end part 421a of the shifter shaft 421, which is connected to the other side part 440b, slides in the direction of the arrow J, so that the rotary clutch 400 (see FIG. 7) becomes the "disconnected state" and the rotation of the tilling claws 6 is stopped.

On the other hand, as described above, the differential lock clutch 500 becomes the "disconnected state", that is, the differential lock clutch 500 is put in a state where the differential function is operated by the restoring force of the spring member 512 (see FIG. 6). Then, the operator makes the tiller 100 take a turn by slightly lifting the operating handle 17 so that the lower end parts of the tilling claws 6 are roughly maintained at the position slightly apart from the ground surface.

According to the above operation, for example, even an unskilled operator for the tilling work can concentrate the consciousness of the operator on performing the smooth turning operation by allowing the differential function to be operated, while ensuring safety by stopping the rotation of the tilling claws 6.

Next, after the turning operation of the tiller 100 is completed, the operator pushes the rotary/differential lock clutch lever 20 forward which was put in a rising state until just before the operation of pushing the rotary/differential lock clutch lever 20 (see the arrow β2 in FIG. 3) so as to make the tiller 100 resume a rotation of the tilling claws 6 and make the differential lock for the left and right traveling wheels 4L and 4R be operated (that is, the differential function is released). By means of this, the rotary/differential lock clutch cable 470 is pulled in the direction of the arrow H (see FIGs. 3 and 14(a)), and the rotary clutch cable 430 and the differential lock clutch cable 530 are pulled in the direction of the arrow H (see FIGs. 14(a) and 14(b)).

Accordingly, the rotary clutch arm 440 rotates in a clockwise direction in plan view about the fulcrum member 335a, and the one end part 421a of the shifter shaft 421, which is connected to the other side part 440b, slides in the direction of the arrow K, so that the rotary clutch 400 (see FIG. 7) becomes the "connected state" and the rotation of the tilling claws 6 is started.

On the other hand, as described above, the differential lock clutch cable 530 is pulled in the direction of the arrow H (see FIG. 14(b)). By means of this, the differential lock arm 550 rotates in a counterclockwise direction in right side view (see an arrow L in FIGs. 4 and 14(b)), the differential lock connecting member 513 is pulled, and the differential lock clutch arm 520 is allowed to be rotated in the direction of the arrow M (see FIG. 6). And as a result, the second claws 511 are allowed to be engaged with the first claws 61, and the differential lock clutch 500 becomes the "connected state", that is, the differential lock clutch 500 is put in a state where the differential function is suspended.

Next, a situation in which, for example, a skilled operator for the tilling work makes the tiller 100 take a turn will be described with reference to FIGs. 15(a) and 15(b) mainly.

The skilled operator may desire to make the differential lock be released (that is, the differential function is operated) for ensuring the smooth turn and make the tilling claws 6 continue the rotation, when making the tiller 100 take a turn.

When the skilled operator starts the tilling work in the farm field, the skilled operator pushes the rotary/differential lock clutch lever 20 forward (see the arrow β2 in FIG. 3). By means of this, the rotary/differential lock clutch cable 470 is pulled in the direction of the arrow H (see FIGs. 3 and 14(a)), and the rotary clutch cable 430 and the differential lock clutch cable 530 are pulled in the direction of the arrow H (see FIGs. 14(a) and 14(b)).

By means of this operation, since the rotary clutch arm 440 rotates in a clockwise direction in plan view about the fulcrum member 335a (see FIG. 14(a)), the lower side hole for fixing rotary clutch 442, which is disposed on the rotary clutch arm 440, and the upper side hole for fixing rotary clutch 335b, which is disposed on the rotary clutch arm support member 335, are superposed on each other.

Then, for satisfying the desire described above, in the situation where the two holes are superposed on each other, the skilled operator removes the rotary clutch fixing pin 460 which is inserted in the holding hole for rotary clutch fixing pin 250a of the stay plate 250, and inserts the rotary clutch fixing pin 460 into the above described superposed holes from the upper side hole for fixing rotary clutch 335b (see FIG. 15(a)).

Accordingly, since the position of the rotary clutch arm 440 is fixed, the "connected state" of the rotary clutch 400 can be kept regardless of the operation of the rotary/differential lock clutch lever 20.

After performing the above described operation, the skilled operator pushes down the main clutch lever 18 (see an arrow α2 in FIG. 3), and the forward travel and the tilling work of the tiller 100 are started.

After that, when the tilling work is performed from one end to the other end of one ridge of the farm field and the skilled operator makes the tiller 100 take a turn so as to make the tiller 100 move to the neighboring ridge to continue the tilling work, the skilled operator pulls the rotary/differential lock clutch lever 20 backward which was tilted forward until just before the operation of pulling the rotary/differential lock clutch lever 20 (see the arrow β1 in FIG. 3).

By means of this, the differential lock arm 550 is rotated in a direction of an arrow N (see FIGs. 4 and 15(b)) and the differential lock clutch cable 530 is pulled in the direction of the arrow I (see FIG. 15(a)), and the rotary/differential lock clutch cable 470 is pulled in the direction of the arrow I (see FIGs. 3 and 15(a)) by the restoring force of the spring member 512 (see FIG. 6) which is disposed on the differential lock clutch 500 side.

As described above, the differential lock clutch 500 becomes the "disconnected state", that is, the differential lock clutch 500 is put in a state where the differential function is operated by the restoring force of the spring member 512 (see FIG. 6).

On the other hand, as described above, since the rotation of the rotary clutch arm 440 is locked by the rotary clutch fixing pin 460, the "connected state" of the rotary clutch 400 is kept and the rotation of the tilling claws 6 is continued.

Accordingly, the skilled operator can make the tiller 100 take a turn, while continuing the rotation of the tilling claws 6 and releasing the differential lock for the left and right traveling wheels 4L and 4R (that is, the differential function is operated). Incidentally, such an operation method may be performed regardless of whether or not the operator is a skilled operator. For example, usually, the ridge of the farm field is formed straightly, but there may be a ridge formed curvedly. Therefore, when performing the tilling work along the curved ridge, such an operation method is used by the unskilled operator as well as the skilled operator.

Meanwhile, in the above described embodiment, a case is described where the parking brake grooves 41a number of which is two are disposed on the end part 41 of the travel second shaft 40. However, the present invention is not limited to this. For instance, the number of the parking brake grooves 41a which are formed over an outer circumferential side surface of the end part 41 of the travel second shaft 40 may be three or more.

Additionally, in the above described embodiment, a case is described where the parking brake pin 301, which is provided with one tip part 301a which is engaged with the parking brake groove 41a and is formed into a spherical shape, is used as one example of an engaged member of the present invention. However, the present invention is not limited to this. For instance, another configuration, in which another engaging member as another one example of an engaged member of the present invention has plural projection parts formed in the shape of a gear on the tip part and a part of the plural projection parts can be engaged with an engaging part which is formed on the one end part of the driving shaft which protrudes from the transmission case to the outside thereof, may be used. In short, the present invention can have any engaging member as long as the configuration is capable of locking the rotation of the driving shaft which protrudes from the transmission case to the outside thereof.

Additionally, in the above described embodiment, a case is described where the travel second shaft 40 protrudes from the transmission case 2. However, the present invention is not limited to this. For instance, another configuration, in which the travel first shaft 30 or another driving shaft of the traveling system is protruded from the transmission case 2, may be used.

Additionally, in the above described embodiment, a case is described where the parking brake lever 311 is disposed in the neighborhood of the one end part 41 of the travel second shaft 40. However, the present invention is not limited to this. For instance, the parking brake lever 311 may be disposed, for example, on the operating handle 17 or any location.

A walk-behind tiller according to the present invention is capable of surely locking the movement of the traveling wheels even when the walk-behind tiller is on the slope or the inclined farm field, and is useful for a walk-behind tiller.

## Claims

1. A walk-behind tiller comprising:
traveling wheels (4L and 4R);
plural tilling claws (6) which till a farm filed;
an engine (15) which rotates the traveling wheels (4L and 4R) and the plural tilling claws (6); and
a transmission case (2) housing a transmission mechanism which transmits driving power from the engine to the traveling wheels (4L and 4R) and the plural tilling claws (6),
a main clutch on/off device (18) which switches connection and disconnection of transmission of the driving power which is provided from the engine (15);
**characterized in that** the walk-behind tiller further comprises
a driving shaft of traveling system (40), whose one end part (41) protrudes from the transmission mechanism to an outside of the transmission case (2), the one end part (41)being provided with an engaging part (41a); and
a parking brake on/off device (311) which has an engaging member (301) being engageable with the engaging part (41a) of the driving shaft of traveling system (40), and which is capable of stopping and releasing a rotation of the driving shaft (40), wherein
by operating the parking brake on/off device (311) to stop the rotation of the driving shaft of traveling system (40), the engaging member (301) is engaged with the engaging part (41a), so that the rotation of the driving shaft (40) is stopped.

2. The walk-behind tiller according to claim 1, wherein
number of the engaging parts (41a) is plural are disposed on the one end part (41).

3. The walk-behind tiller according to claim 1 or 2, wherein
the main clutch on/off device (18) is connected with the parking brake on/off device (311),
in a state where the main clutch on/off device (18) is switched to a disconnection side, an action to switch the parking brake on/off device (311) so as to stop the rotation of the driving shaft (40), becomes possible, and
when the main clutch on/off device (18) is switched to a connection side, the parking brake on/off device (311) is switched so as to release the rotation of the driving shaft (40) in conjunction with a switching action of a connection side of the main clutch on/off device (18), so that the driving shaft (40) can rotate.

4. The walk-behind tiller according to any one of claims 1 to 3, comprising:
an operating handle (17) which is disposed at rear side of a body of the walk-behind tiller, wherein
the main clutch on/off device (18) is disposed on the operating handle (17), and
the parking brake on/off device (311) is disposed in the neighborhood of the driving shaft (40) having the engaging part (41a).

5. The walk-behind tiller according to claim 3, wherein
when the main clutch on/off device (18) is kept in the connection side, the parking brake on/off device (311) cannot be operated to a side for stopping the rotation of the driving shaft (40).

## Patentansprüche

1. Handgeführte Bodenfräse, umfassend:
Laufräder (4L und 4R);
mehrere Fräsklauen (6), die eine landwirtschaftliche Fläche fräsen;
einen Motor (15), der die Laufräder (4L und 4R) und die mehreren Fräsklauen (6) dreht; und
ein Übertragungsgehäuse (2), das einen Übertragungsmechanismus aufnimmt, der Antriebsenergie von dem Motor auf die Laufräder (4L und 4R) und die mehreren Fräsklauen (6) überträgt;
eine Ein/Aus-Vorrichtung (18) einer Hauptkupplung, welche die Verbindung und Trennung der Übertragung der Antriebsenergie, die von dem Motor (15) bereitgestellt wird, umschaltet;
**dadurch gekennzeichnet, dass** die handgeführte Bodenfräse ferner Folgendes umfasst:
eine Antriebswelle des Laufsystems (40), deren einer Endteil (41) von dem Übertragungsmechanismus zu einer Außenseite des Übertragungsgehäuses (2) vorsteht, wobei der eine Endteil (41) mit einem Eingriffsteil (41a) versehen ist; und
eine Ein/Aus-Vorrichtung (311) einer Feststellbremse, die ein Eingriffselement (301) aufweist, das mit dem Eingriffsteil (41a) der Antriebswelle des Laufsystems (40) in Eingriff gebracht werden kann, und das in der Lage ist, eine Drehung der Antriebswelle (40) zu unterbrechen und freizugeben, wobei
durch die Betätigung der Ein/Aus-Vorrichtung (311) der Feststellbremse, um die Drehung der Antriebswelle des Laufsystems (40) zu unterbrechen, das Eingriffselement (301) mit dem Eingriffsteil (41a) in Eingriff gebracht wird, so dass die Drehung der Antriebswelle (40) unterbrochen wird.

2. Handgeführte Bodenfräse nach Anspruch 1, wobei die mehrfach vorhandenen Eingriffsteile (41a) an dem einen Endteil (41) angeordnet sind.

3. Handgeführte Bodenfräse nach Anspruch 1 oder 2, wobei die Ein/Aus-Vorrichtung (18) der Hauptkupplung mit der Ein/Aus-Vorrichtung (311) der Feststellbremse verbunden ist,
in einem Zustand, in dem die Ein/Aus-Vorrichtung (18) der Hauptkupplung auf eine Trennungsseite geschaltet ist, eine Aktion zum Schalten der Ein/Aus-Vorrichtung (311) der Feststellbremse, um die Drehung der Antriebswelle (40) zu unterbrechen, ermöglicht wird, und
wenn die Ein/Aus-Vorrichtung (18) der Hauptkupplung auf eine Verbindungsseite geschaltet wird, die Ein/Aus-Vorrichtung (311) der Feststellbremse derart geschaltet wird, dass sie die Drehung der Antriebswelle (40) in Verbindung mit einer Schaltaktion einer Verbindungsseite der Ein/Aus-Vorrichtung (18) der Hauptkupplung freigibt, so dass sich die Antriebswelle (40) drehen kann.

4. Handgeführte Bodenfräse nach einem der Ansprüche 1 bis 3, umfassend:
einen Betätigungsgriff (17), der an einer Rückseite eines Körpers der handgeführten Bodenfräse angeordnet ist, wobei
die Ein/Aus-Vorrichtung (18) der Hauptkupplung an dem Betätigungsgriff (17) angeordnet ist, und
die Ein/Aus-Vorrichtung (311) der Feststellbremse in der Nähe der Antriebswelle (40) angeordnet ist, die den Eingriffsteil (41a) aufweist.

5. Handgeführte Bodenfräse nach Anspruch 3, wobei, wenn die Ein/Aus-Vorrichtung (18) der Hauptkupplung auf der Verbindungsseite bleibt, die Ein/Aus-Vorrichtung (311) der Feststellbremse nicht auf eine Seite betätigt werden kann, um die Drehung der Antriebswelle (40) zu unterbrechen.

## Revendications

1. Motoculteur comprenant :
des roues de déplacement (4L et 4R) ;
plusieurs griffes de labourage (6) qui labourent un champ agricole ;
un moteur (15) qui fait tourner les roues de déplacement (4L et 4R) et la pluralité de griffes de labourage (6) ; et
un boîtier de transmission (2) logeant un mécanisme de transmission qui transmet la puissance d'entraînement du moteur aux roues de déplacement (4L et 4R) et à la pluralité de griffes de labourage (6),
un dispositif de marche/arrêt d'embrayage principal (18) qui commute la connexion et la déconnexion de la transmission de la puissance d'entraînement qui est fournie à partir du moteur (15) ;
**caractérisé en ce que** le motoculteur comprend en outre :
un arbre d'entraînement du système de déplacement (40), dont une partie d'extrémité (41) fait saillie du mécanisme de transmission jusqu'à l'extérieur du boîtier de transmission (2), la une partie d'extrémité (41) étant prévue avec une partie de mise en prise (41a) ; et
un dispositif de marche/arrêt de frein de stationnement (311) qui a un élément de mise en prise (301) qui peut se mettre en prise avec la partie de mise en prise (41a) de l'arbre d'entraînement du système de déplacement (40) et qui peut arrêter et libérer une rotation de l'arbre d'entraînement (40),
dans lequel :
en actionnant le dispositif de marche/arrêt de frein de stationnement (311) pour arrêter la rotation de l'arbre d'entraînement du système de déplacement (40), l'élément de mise en prise (301) est mis en prise avec la partie de mise en prise (41a), de sorte que la rotation de l'arbre d'entraînement (40) est arrêtée.

2. Motoculteur selon la revendication 1, dans lequel :
on trouve une pluralité de parties de mise en prise (41a) qui sont disposées sur la une partie d'extrémité (41).

3. Motoculteur selon la revendication 1 ou 2, dans lequel :
le dispositif de marche/arrêt d'embrayage principal (18) est connecté avec le dispositif de marche/arrêt de frein de stationnement (311),
dans un état dans lequel le dispositif de marche/arrêt d'embrayage principal (18) est commuté vers un côté de déconnexion, une action pour commuter le dispositif de marche/arrêt de frein de stationnement (311) afin d'arrêter la rotation de l'arbre d'entraînement (40) devient possible, et
lorsque le dispositif de marche/arrêt d'embrayage principal (18) est commuté vers le côté de connexion, le dispositif de marche/arrêt de frein de stationnement (311) est commuté afin de libérer la rotation de l'arbre d'entraînement (40) conjointement avec une action de commutation d'un côté de connexion du dispositif de marche/arrêt d'embrayage principal (18), de sorte que l'arbre d'entraînement (40) peut tourner.

4. Motoculteur selon l'une quelconque des revendications 1 à 3, comprenant :
une poignée de commande (17) qui est disposée du côté arrière d'un corps du motoculteur, dans lequel :
le dispositif de marche/arrêt d'embrayage principal (18) est disposé sur la poignée de commande (17), et
le dispositif de marche/arrêt de frein de stationnement (311) est disposé au voisinage de l'arbre d'entraînement (40) ayant la partie de mise en prise (41a).

5. Motoculteur selon la revendication 3, dans lequel :
lorsque le dispositif de marche/arrêt d'embrayage principal (18) est maintenu du côté de connexion, le dispositif de marche/arrêt de frein de stationnement (311) ne peut pas être actionné vers un côté pour arrêter la rotation de l'arbre d'entraînement (40).
